(19)

Europäisches Patentamt
European Patent Office
Office européen des brevets

(11) **EP 4 163 882 A2**

(12) **EUROPEAN PATENT APPLICATION**

(43) Date of publication:
**12.04.2023 Bulletin 2023/15**

(21) Application number: **22196930.6**

(22) Date of filing: **21.09.2022**

(51) International Patent Classification (IPC):
***G06V 40/20*** (2022.01)     ***G06V 20/70*** (2022.01)

(52) Cooperative Patent Classification (CPC):
**G06F 18/214; G06T 7/20; G06T 13/40;**
**G06V 10/82; G06V 20/70; G06V 40/23**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.09.2021 US 202163246447 P**

(71) Applicant: **Max-Planck-Gesellschaft zur**
**Förderung der**
**Wissenschaften e.V.**
**80539 München (DE)**

(72) Inventors:
• **Black, Michael J.**
  **72076 Tübingen (DE)**
• **Ghorbani, Nima**
  **72072 Tübingen (DE)**

(74) Representative: **Hofmann, Matthias**
**Boehmert & Boehmert**
**Anwaltspartnerschaft mbB**
**Pettenkoferstraße 22**
**80336 München (DE)**

(54) **METHOD AND SYSTEM FOR LABELLING MOTION-CAPTURED POINTS**

(57)     The present invention provides a computer-implemented method for labelling motion-captured points $(P_t)$ which correspond to markers on a object, the method comprising: obtaining the motion-captured points $(P_t)$, processing a representation of the motion-captured points in a trained self-attention unit to obtain label scores $(S)$ for the motion-captured points, and assigning labels $(L_t)$ based on the label scores $(S)$.

Fig. 3

**EP 4 163 882 A2**

**Description**

TECHNICAL FIELD

The present invention relates to Computer-implemented methods for labelling motion-captured points which correspond to markers on an object. The present invention also relates to a system and a computer-readable storage medium storing program code, the program code comprising instructions for carrying out such a method.

BACKGROUND

Marker-based optical motion capture (mocap) is the "gold standard" method for acquiring accurate 3D human motion in computer vision, medicine, and graphics. The raw output of these systems are noisy and incomplete 3D points or short tracklets of points. To be useful, one must associate these points with corresponding markers on the captured subject; i.e. "labelling". Given these labels, one can then "solve" for the 3D skeleton or body surface mesh. Commercial auto-labeling tools require a specific calibration procedure at capture time, which is not possible for archival data.

Marker-based optical motion capture (mocap) systems typically record 2D infrared images of the light reflected or emitted by a set of markers placed on key locations on the surface of a subject's body. Subsequently, mocap systems can recover the precise position of the markers as a sequence of sparse and unordered points or short tracklets of them. Powered by years of commercial development, these systems offer high temporal and spatial accuracy. Richly varied mocap data from such systems is widely used to train machine learning methods in action recognition, motion synthesis, human motion modeling, pose estimation, etc. Despite this, the largest existing mocap dataset, AMASS [23], has about 45 hours of mocap, much smaller than video datasets used in the field.

Mocap data is limited since capturing and processing it is expensive. Despite its value, there are large amounts of archival mocap in the world that have never been labeled; the dark matter of mocap. The problem is that, to solve for the 3D body, the raw mocap point cloud (MPC) should be "labeled"; that is, the points must be assigned to physical "marker" locations on the subject's body. This is challenging because the MPC is noisy and sparse and the labeling problem is ambiguous. Existing commercial tools, e.g. [30, 50], offer partial automation, however none provide a complete solution to automatically handle variations in marker layout, i.e. number of markers used and their rough placement on the body, variation in subject body shape and gender, and variation across capture technologies namely active vs passive markers or brand of system. These challenges typically preclude cost-effective labeling of archival data, and add to the cost of new captures by requiring manual cleanup.

Automating the mocap labeling problem has been examined by the research community [13,15, 18]. Available methods often focus on fixing the mistakes in already labeled markers through denoising [18]. In short, the existing methods are limited to a constrained range of motions [13], single body shape [15, 18], certain capture scenario, a special marker layout, or subject-specific calibration sequence [13, 30, 50]. Moreover, some methods require high-quality real mocap marker data for the learning process, effectively prohibiting their scalability to novel scenarios.

SUMMARY OF THE INVENTION

The objective of the present invention is to provide a Computer-implemented method for labelling motion-captured points which correspond to markers on an object and a method of training a self-attention unit for labelling motion-captured points, which overcome one or more of the above-mentioned problems of the prior art.

A first aspect of the invention provides a Computer-implemented method for labelling motion-captured points which correspond to markers on an object, the method comprising:

- obtaining the motion-captured points,
- processing a representation of the motion-captured points in a trained self-attention unit to obtain label scores for the motion-captured points, and
- assigning labels based on the label scores.

The self-attention unit may comprise a self-attention network.

The method of the first aspect is based on the realization that a self-attention unit, e.g. a self - attention network as commonly known from the field of natural language processing, is ideally suited for obtaining label scores for motion-captured points.

The motion-captured points can correspond to markers on an object in the sense that they were acquired by capturing markers that are mounted on a moving object. The object may comprise the body of a human or animal, but may also comprise the body of an inanimate object. The object may also comprise the body of a human and inanimate objects that the human is carrying, e.g. a guitar. More generally, the motion-captured points may correspond to markers on multiple people, animals, humans and objects separate or together, faces, hands, etc.

In other words, labelling motion-captured points which correspond to markers on an object herein also comprises motion-captured points that correspond to markers on multiple inanimate or animate objects.

Obtaining the motion-captured points may comprise reading a digital representation of the motion-captured points from a computer-readable medium or over a network, and/or it may comprise actually acquiring the motion-captured points using a motion capture system.

Processing a representation of the motion-captured points in a trained self-attention network to obtain label scores for the motion-captured points may refer to processing values of the motion-captured points in a self-attention network whose parameters are predetermined, e.g. predetermined by training the self-attention network.

Preferably, the self-attention network is a multi-headed self-attention network.

Assigning the labels can be performed e.g. simply by assigning that label that has the highest label score. In other embodiments, the assigning of the labels can comprise considering constraints on the labels. Assigning the labels may comprise assigning a single label for each motion-captured point. In other embodiments, it may comprise assigning a probability distribution of labels for each motion-captured point.

Embodiments of the first aspect take raw mocap point clouds with varying number of points, label them at scale without any calibration data, independent of the capture technology, requiring only minimal human intervention. One important insight is that, while labeling point clouds is highly ambiguous, the 3D body provides strong constraints on the solution that can be exploited by a learning-based method.

To enable learning, training sets can be generated of simulated noisy and ground truth mocap markers animated by 3D bodies from AMASS. A preferred embodiment of the first aspect exploits an architecture with stacked self-attention elements to learn the spatial structure of the 3D body and an optimal transport layer to constrain the assignment (labeling) problem while rejecting outliers. The presented method has been evaluated extensively both quantitatively and qualitatively. Experiments have shown that it is more accurate and robust than existing research methods and can be applied where commercial systems cannot.

In a first implementation of the method according to the first aspect, the self-attention unit comprises a sequence of two or more subnetworks. Preferably, each subnetwork comprises a self-attention layer that is configured to: determine a query from a particular subnetwork input, determine keys derived from subnetwork inputs, determine values derived from subnetwork inputs, and use the determined query, keys and values to generate an output for the particular subnetwork input.

Preferably, at least one of the one or more subnetworks further comprises a residual connection layer that combines an output of the self-attention layer with inputs to the self-attention layer to generate a self-attention residual output, wherein the at least one subnetwork preferably further comprises a normalization layer that applies normalization to the self-attention residual output.

The normalization layer can be preferably a batch normalization layer or in other embodiments a normalization layer that applies layer normalization to the self-attention residual output.

In a further implementation of the method of the first aspect, the method further comprises a step of employing an optimal transport of the label scores to enforce:

- a first constraint that each of the motion-captured points can be assigned to at most one label and vice versa,
- a second constraint that each of the motion-captured points can be assigned at most one tracklet, and/or
- a third constraint that all member points of a given tracklet are assigned to a same label, wherein preferably the method comprises a step of assigning a most frequent label of member points of the given tracklet is assigned to all of the member points of the given tracklet.

Preferably the labels comprise a null label for which the first and/or third constraint does not apply.

Enforcing one or more of the above constraints has the advantage that the label scores (and hence the predicted labels) correspond to physically sensible predictions.

In a further implementation of the method of the first aspect, assigning labels based on the label scores comprises constraining rows and columns of a score matrix that comprises the labels scores to obtain an assignment matrix.

In a further implementation of the method of the first aspect, the constraining the rows and columns of the score matrix comprises using optimal transport, preferably depending on iterative Sinkhorn normalization, to constrain the rows and columns of the assignment matrix to sum to 1 for available points and labels, respectively, to obtain an augmented assignment matrix with a row and/or column for unassigned labels and/or points, respectively.

Preferably, the optimal transport depends on iterative Sinkhorn normalization to constrain rows and columns of an assignment matrix, which comprises the label scores, to sum to 1 for available points and labels, respectively, to obtain an augmented assignment matrix.

In a further implementation of the method of the first aspect, the self-attention unit has been trained using virtual marker locations as input and corresponding labels as output, wherein preferably the virtual marker locations have been obtained by distorting initial virtual marker locations.

Preferably, the self-attention unit is a multi-headed self-attention network.

In a further implementation of the method of the first aspect, the method further comprises a step of fitting an articulated 3D body mesh to the labelled motion-captured points.

A second aspect of the present invention provides a method of training a self-attention unit for labelling motion-captured points which correspond to markers on a body, the method comprising:

- obtaining an initial training set comprising a representation of initial virtual marker locations and corresponding initial training labels,
- distorting the initial training set to obtain an augmented training set, and
- training the self-attention unit with the augmented training set.

The method of the second aspect can be used for example to train the self-attention unit that is used in the method of the first aspect. An additional aspect of the invention relates to a method that comprises training using the method of the second aspect and using the trained self-attention unit to perform inference using the method of the first aspect.

There may be different ways of representing a virtual marker location. Therefore, in the following we refer to points as an example of a representation. Therein, point is not limited to a specific way of representing the location. In particular, a point can be represented in Cartesian coordinates, any other parametric representation or even a non-parametric representation.

In a first implementation of the method of the second aspect, the representation of the virtual maker locations comprises vertex identifiers and distorting the initial training set comprises:

- randomly sampling a vertex identifier in a neighbourhood of an initial vertex to obtain a distorted vertex identifier, and
- adding the distorted vertex identifier to the augmented training set.

In a further implementation of the method of the first aspect, the representation comprises points and distorting the initial virtual marker locations comprises applying a random rotation, in particular a random rotation $r \in [o, 2\pi]$, to a spatial representation of initial marker locations that correspond to a same object frame.

If there are multiple objects, a random rotation could be applied equally to all of them or each of them independently.

Preferably, the distorting the initial training set comprises:

- appending ghost points to the frame, and/or
- occluding randomly selected initial points,

wherein preferably a number of appended ghost points and/or a number of randomly occluded marker points is determined randomly.

Preferably, the training the multi-headed self-attention unit comprises evaluating a loss function which comprises a weighted sum of an assignment term and a model parameter regularization term, wherein in particular the loss function is representable as:

$$\mathbb{L} = c_l \mathbb{L}_A + c_{reg} \mathbb{L}_{reg},$$

where

$$\mathbb{L}_A = \frac{-1}{\sum_{i,j} G'_{i,j}} \sum_{i,j} W_{i,j} \cdot G'_{i,j} \cdot log(A'_{i,j}),$$

$$\mathbb{L}_{reg} = ||\phi||_2^2.$$

where A' is the augmented assignment matrix, G' is a ground-truth version of the augmented assignment matrix, and W is a matrix for down-weighting an influence of an overweighted class and wherein $\mathbb{L}_{reg}$ is a $L_2$ regularization on model parameters.

Preferably, the matrix for down-weighting an influence of an overweighted class W comprises reciprocals of occurrence frequencies of classes.

A third aspect of the invention refers to a computer-readable storage medium storing program code, the program code comprising instructions that when executed by a processor carry out the method of the second aspect or one of the implementations of the second aspect.

A further aspect of the invention provides a system for labelling motion motion-captured points which correspond to markers on a body, the system being configured to carry out the method of the first aspect or one of its implementations.

A further aspect of the invention provides a system for training a multi-headed self-attention unit for labelling motion-captured points which correspond to markers on a body, the system being configured to carry out the method of the second aspect or one of its implementations.

BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

Fig. 1    is a schematic illustration of how bodies have been labelled using an embodiment of the presented method;

Fig. 2    is a schematic illustration of the mocap labelling problem;

Fig. 3    is an overview of the presented labelling pipeline;

Fig. 4    visualizes the attention placed on markers on the object in a canonical pose;

Fig. 5    shows the attention span as a function of layer depth;

Fig. 6    illustrates attention span for 14 markers, across all layers;

Fig. 7    is a diagram showing validation accuracy as a function of the number of attention layers;

Fig. 8    is a diagram showing validation accuracy as a function of number of Sinkhorn normalization steps;

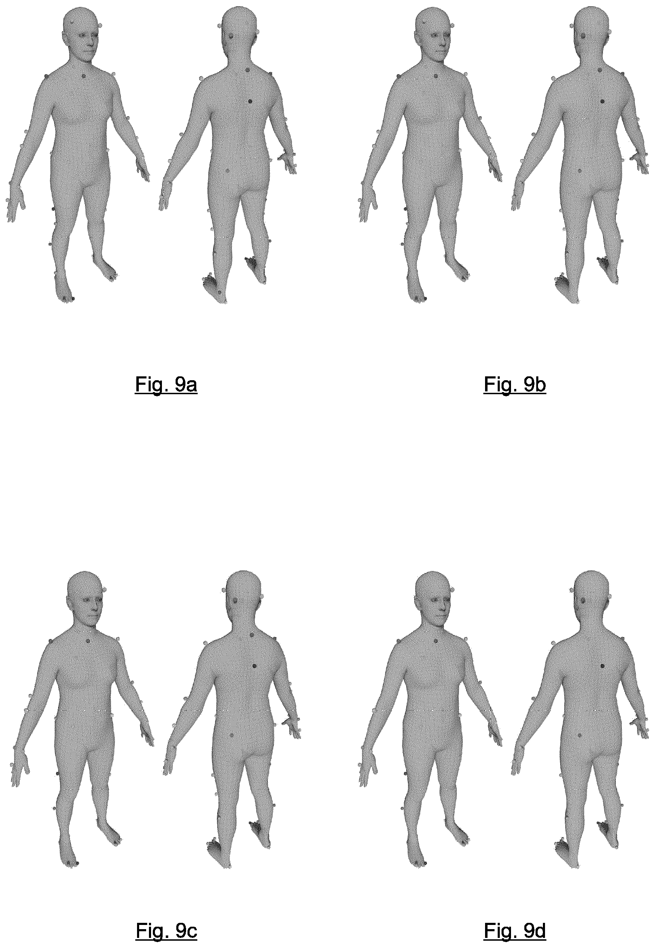

Fig. 9    illustrates the effect of marker layout modifications, where the following number of markers have been removed: (a) 3 markers removed, (b) 5 markers re-moved, (c) 9 markers removed, (d) 12 markers removed;

Fig. 10   illustrates the marker layout of the following test and validation datasets: (a) BMLmovi, (b) BMLrub, (c) KIT, (d) HDMo$_5$;

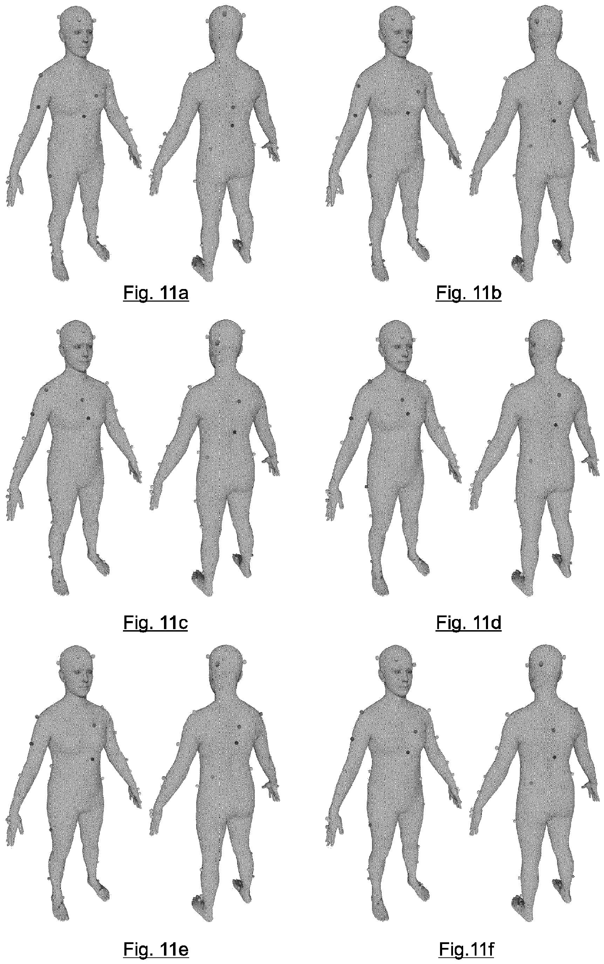

Fig. 11   illustrates the significant variation of marker placement of DanceDB on hands and feet;

Fig. 12   illustrates a sample of marker layouts used for training a SOMA model for the CMU-II dataset; and

Fig. 13   illustrates a marker layout from the MoSh dataset with 89 markers. A model trained on this marker layout is used for rapid automatic label priming for labeling the single frame per significant marker layout variation.

DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

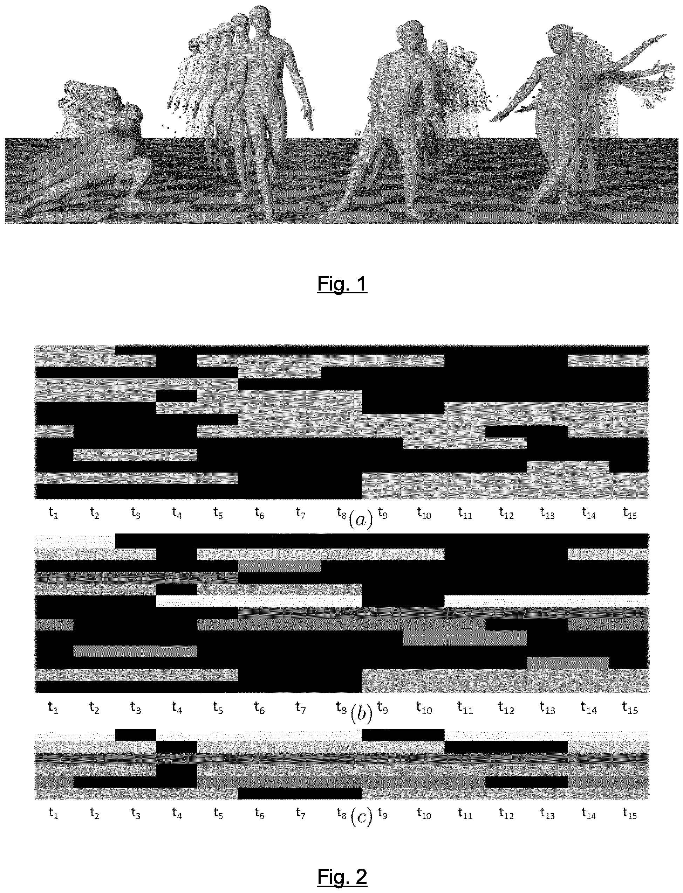

Fig. 1 shows how SOMA transforms raw mocap point clouds (black dots) to labeled markers. The cubes in yellow are detected "ghost" points; e.g. spurious reflections, non-body markers, or unidentified points. With labeled mocap we fit SMPL-X bodies using MoSh.

In the following, a preferred embodiment of the present invention which is called SOMA shall be presented in more detail.

To address the above-mentioned shortcomings of prior art methods we take a data-driven approach and train a neural network end-to-end with self-attention components and an optimal transport layer to predict a solution to a per-frame constrained inexact matching problem. Where having enough "real" data for training is not feasible, we opt for synthetic data.

Given a marker layout, we generate synthetic mocap point clouds with realistic noise, and subsequently train a layout-specific network that can cope with the mentioned variations across a whole mocap dataset. While previous work has exploited synthetic data [15, 18], they are limited to a small pool of body shapes, motions, marker layouts, and noise sources.

Even with a large synthetic corpus of MPC, labeling a cloud of sparse 3D points, containing outliers and missing data, is a highly ambiguous task. The key to the solution lies in the fact that the points are structured, and do not move randomly. Rather, they are constrained by the shape and motion of the human body. Given sufficient training data, our attentional framework learns to exploit local context at different scales. Furthermore, if there were no noise, the mapping between labels and points would be one-to-one. We formulate these concepts as a unified training objective enabling end-to-end model training. Specifically, our formulation exploits a transformer architecture to capture local and global contextual information using self-attention.

By generating synthetic mocap data with varying body shapes and poses, SOMA can implicitly learn the kinematic constraints of the underlying deformable human body. Preferably, a one-to-one match between 3D points and markers, subject to missing and spurious data, can be achieved by a special normalization technique. To provide a common output framework, consistent with [23], we use MoSh [22, 23] as a post-processing step to fit SMPL-X [31] to the labeled points; this also helps deal with missing data caused by occlusion or dropped markers.

To generate training data, SOMA can use a rough marker layout that can be obtained by a single labeled frame, which requires minimal effort. Afterward, virtual markers are automatically placed on a SMPL-X body and animated by motions from AMASS [23]. In addition to common mocap noise models like occlusions [13, 15, 18], and ghost points [15, 18], we introduce novel terms to place markers slightly different on the body surface, and further copy noise from real marker data in AMASS. Preferably, SOMA is trained once for each mocap dataset and apart from the one layout frame, we do not require any labeled real data. After training, given a noisy MPC frame as input, SOMA can predict a distribution over labels of each point, including a null label for ghost points.

We evaluate SOMA on several challenging datasets and find that we outperform the current state of the art numerically while being much more general. Additionally, we capture new MPC data using a Vicon mocap system and compare hand-labeled ground-truth to Shogun and SOMA output. SOMA achieves similar performance as the commercial system. Finally, we apply the method on archival mocap datasets: Mixamo [3], DanceDB [6], and a previously unreleased portion of CMU mocap dataset [9].

Some of the contributions over the prior art include: (1) a novel neural network architecture exploiting self-attention to process sparse deformable point cloud data; (2) a system that consumes mocap point cloud directly and outputs a distribution over marker labels; (3) a novel synthetic mocap generation pipeline that generalizes to real mocap datasets; (4) a robust solution that works with archival data, different mocap technologies, poor data quality, and varying subjects and motions; (5) 8 hours of processed mocap data in SMPL-X format from 4 datasets.

Preferably, MoSh [22, 23] can be used for post-processing auto-labeled mocap across different datasets into a unified SMPL-X representation.

A mocap point cloud, MPC, can be represented as a time sequence with T frames of 3D points

$$\mathrm{MPC} \quad = \quad \{P_1, \ldots, P_T\},$$

$$P_t \quad = \quad \{P_{t,1}, \ldots, P_{t,n_t}\}, \quad P_{t,i} \in \mathbb{R}^3,$$

where $|P_t| = n_t$ for each time step $t \in \{1: T\}$. We visualize an MPC as a chart in Fig. 2a, where each row corresponds to a point, $P_{t,i}$, and each column represents a time instant. Each point is unlabeled, but these can often be locally tracked over short time intervals, illustrated by the gray bars in the figure. Note that some of these tracklets may correspond to noise or "ghost points". For passive marker systems like Vicon [50], a point that is occluded would typically appear in a new row; i.e. with new ID. For active marker systems like PhaseSpace [33], one can have gaps in the trajectories due to occlusion. The figure shows both types.

The goal of mocap labeling is to assign each point (or tracklet) to a corresponding marker label

$$L = \{l_1, \ldots, l_M, \mathrm{null}\},$$

in the marker layout. Such labeling is illustrated in Fig. 2b, where each color is a different label. The set of marker labels include an extra null label for points that are not valid markers, hence $|L| = M + 1$. These are shown as red in the figure. Valid point labels and tracklets of them are subject to several constraints: ($C_i$) each point $P_{t,i}$ can be assigned to at most one label and vice versa; ($C_{ii}$) each point $P_{t,i}$ can be assigned to at most one tracklet; ($C_{iii}$) the label null is an exception and can be matched to more than one point and can be present in multiple tracklets in each frame.

Preferably, the tracklets are provided by capture hardware. In that case, obtaining the motion-captured points may comprise obtaining tracklets, wherein a tracklet may indicate that a sequence of points of different time steps correspond to a fragment of a track of one marker, as illustrated e.g. in Figure 2.

Preferably, the method of the first aspect tries to come up with a label-point bijective assignment, yet in embodiments this is not guaranteed. However, during assigning labels to tracklets, preferably all member points of this tracklet are assigned to the most frequent label of the member points. In case still two tracklets get the same label other than null, preferably their label is rejected and instead both are assigned to null.

Fig. 2 visualizes the mocap labeling problem, (a) represents raw, unlabeled, mocap data (i.e. MPC). Each column represents a timestamp in a mocap sequence and each row is a 3D point or a short tracklet (shown in gray). (b) shows the MPC after labeling. Different labels in the marker layout are shown, including ghost points (outliers). The oblique lines show ghost points wrongly tracked as a actual markers by the mocap system, (c) shows the final result, with the tracklets glued together to form full trajectories with only valid markers retained.

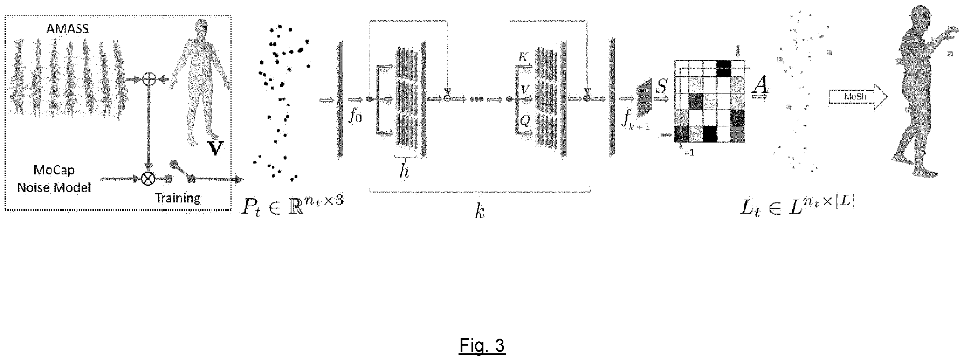

Here we provide details of the method. For a summary, the system pipeline is illustrated in Fig. 3.

## Self-Attention on MoCap Point Clouds

The input to SOMA is preferably a single frame of sparse, unordered, points, the cardinality of which varies with each timestamp due to occlusions and ghost points. To process such data, we exploit a self-attention mechanism [49]. Preferably, we use multiple layers of the multihead attention formulation concatenated via residual operations [16,49]. This can improve the capacity of the model, and enables the network to have a local and a global view of the point cloud to disambiguate points.

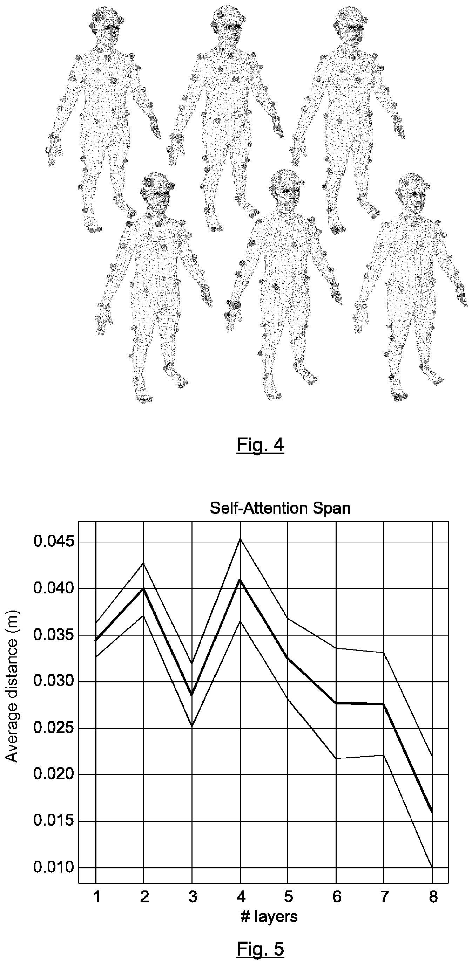

We define self-attention span as the average of attention weights over random sequences picked from our validation dataset. Fig. 4 visualizes the attention placed on markers at the first and last self-attention layers; different grey levels indicating different attention. Note that the points are shown here on a body in a canonical pose but the actual mocap point cloud data is in many poses. Note also that the deeper layers have focused attention on geodesically near body regions (wrist: upper and lower arm) or regions that are highly correlated (left foot: right foot and left knee), indicating that the network has figured out the spatial structure of the body and correlations between parts even though the observed data points are non-linearly transformed in Euclidean space by articulation. Further below, we provide further computational details and demonstrate the self-attention span as a function of network depth. Furthermore, we present a model-selection experiment to choose the optimum number of layers for best results.

## Constrained Point Labeling

In the final stage of the architecture, SOMA predicts a non-square score matrix $S \in R^{nt \times M}$. To satisfy the constraints $C_i$ and $C_{ii}$, we employ a log-domain, stable implementation of optimal transport [38] described by [32]. The optimal transport layer depends on iterative Sinkhorn normalization [2, 41, 42], which constrains rows and columns to sum to 1 for available points and labels. To deal with missing markers and ghost points, following [38], we introduce dustbins by appending an extra last row and column to the score matrix. These can be assigned to multiple unmatched points and labels, hence respectively summing to $n_t$ and M. After normalization, we reach the augmented assignment matrix, $A' \in [o, 1]^{(nt+1) \times |L|}$, of which we drop the appended row, for unmatched labels, yielding the final normalized assignment matrix $A \in [o, 1]^{nt \times |L|}$.

Prior art score normalization approaches cannot handle unmatched cases, which is critical to handle real mocap point cloud data, in its raw form.

## Solving for the Body

Once mocap points are labeled, we "solve" for the articulated body that lies behind the motion. Typical mocap solvers [18,30,50] fit a skeletal model to the labeled markers. Instead, here we fit an entire articulated 3D body mesh to markers using MoSh [22, 23]. This technique gives an animated body with a skeletal structure so nothing is lost over traditional methods while yielding a full 3D body model, consistent with other recent mocap datasets [23, 46]. Here we fit the SMPL-X body model. which provides forward compatibility for datasets with hands and face captures.

**Synthetic MoCap Generation**

Fig. 3 shows how SOMA can be trained solely with synthetic data. At runtime, SOMA receives an unprocessed 3D sparse mocap point cloud, $P_t$, with a varying number of points. These are median centered and passed through the pipeline, consisting of self-attention layers and a final normalization to encourage bijective label-point correspondence. The network outputs labels, $L_t$, assigned to each point, that correspond to markers in the training marker layout, v, with an additional null label. Finally, a 3D body is fit to the labeled points using MoSh. The dimensionalities of the features are

$$\{K, V, Q\} \in \mathbb{R}^{n_t \times \frac{d_{model}}{h}}, f_0 \in \mathbb{R}^{n_t \times d_{model}}, f_{k+1} \in \mathbb{R}^{n_t \times 256}, A \in \mathbb{R}^{n_t \times |L|}.$$

**Human Body Model.** To synthetically produce realistic mocap training data with ground truth labels, we leverage a gender-neutral, state of the art statistical body model SMPL-X [31] that uses vertex-based linear blend skinning with learned corrective blend shapes to output global position of |V| = 10, 475 vertices:

$$\text{SMPL-X}(\theta_b, \beta, \gamma) : \mathbb{R}^{|\theta_b| \times |\beta| \times |\gamma|} \rightarrow \mathbb{R}^{3N}.$$

Here $\theta_b \in R^{3(J+1)}$ is the axis-angle representation of the body pose where J = 21 is the number of body joints of an underlying skeleton in addition to a root joint for global rotation. We use $\beta \in R^{10}$ and $\gamma \in R^3$ to respectively parameterize body shape and the global translation. Compared to the original SMPL-X notation, here we discard parameters that control facial expressions, face and hand poses; i.e. respectively $\psi$, $\theta_f$, $\theta_h$. We build in SMPL-X to enable extension of SOMA to datasets with face and hand markers. For more details we refer the reader to [31].

**MoCap Noise Model.** Various noise sources can influence mocap data, namely: subject body shape, motion, marker layout and the exact placement of the markers on body, occlusions, ghost points, mocap hardware intrinsics, and more. To learn a robust model, we exploit AMASS [23] that we refit with a neutral gender SMPL-X body model and sub-sample to a unified 30 Hz. To be robust to subject body shape we generate AMASS motions for 3664 bodies from the CAESAR dataset [37]. Specifically, for training we take parameters from the following mocap sub-datasets of AMASS: CMU [9], Transitions [23] and Pose Prior [5]. For validation we use HumanEva [40], ACCAD [4], and TotalCapture [25].

Given a marker layout of a target dataset, v, as a vector of length M in which the index corresponds to the maker label and the entry to a vertex on the SMPL-X body mesh, together with vector of marker-body distances d we can place virtual markers, $X \in R^{M \times 3}$ on the body:

$$X = \text{SMPL-X}(\theta_b, \beta, \gamma)|_{\mathbf{v}} + \mathbf{N}|_{\mathbf{v}} \odot \mathbf{d}. \qquad (1)$$

Here $N \in R^{V \times 3}$ is a matrix of vertex normals and $|_v$ picks the vector of elements (vertices or normals) corresponding to vertices defined by the marker layout.

With this, we produce a library of mocap frames and corrupt them with various controllable noise sources. Specifically, to generate a noisy layout, we randomly sample a vertex in the 1-ring neighborhood of the original vertex specified by the marker layout, effectively producing a different marker placement, $\tilde{v}$, for each data point. Instead of normalizing the global body orientation, common to previous methods [13, 15, 18], we add a random rotation $r \in [o, 2\pi]$ to the global root orientation of every body frame to augment this value. Further, we copy the noise for each label from the real AMASS mocap markers to help generalize to mocap hardware differences. We create a database of the differences between the simulated and actual markers of AMASS and draw random samples from this noise model to add to the synthetic marker positions.

Furthermore, we append ghost points to the generated mocap frame, by drawing random samples from a 3-dimensional Gaussian distribution with mean and standard deviation equal to the median and standard deviation of the marker positions, respectively. Moreover, to simulate marker occlusions we take random samples from a uniform distribution representing the index of the markers and occlude selected markers by replacing their value with zero. The number of added ghost points and occlusion in each frame can also be subject to randomness.

At test time, to mimic broken trajectories of a passive mocap system, we randomly choose a marker trajectory and break it at random timestamps. To break a trajectory we copy marker values at the onset of the breakage and create a new trajectory whose previous values up-to-the breakage are zero and the rest are replaced by the marker of interest. The original marker trajectory after breakage is replaced by zeros.

Finally, at train and test times we randomly permute the markers to create an unordered set of 3D mocap points. Preferably, the permutations are random and not limited to a specific set of permutations.

The presented methods can be executed by the processor of a general purpose computer, some of the computations may be preferably executed on a GPU.

Fig. 4 shows the visualization of attention for different markers on the body in a canonical pose. The cube shows the marker of interest and color intensity depicts the average value of attention across frames of 50 randomly selected sequences. Each column shows a different marker. At first layer (top) we see wider attention compared to the deepest layer (bottom).

**Loss.** The total loss for training SOMA is formulated as, $\mathbb{L} = c_l \mathbb{L}_A + c_{reg} \mathbb{L}_{reg}$ , where:

$$\mathbb{L}_A = \frac{-1}{\sum_{i,j} G'_{i,j}} \sum_{i,j} W_{i,j} \cdot G'_{i,j} \cdot log(A'_{i,j}),$$

$$\mathbb{L}_{reg} = \|\phi\|_2^2.$$

A' is the augmented assignment matrix, and G' is its ground-truth version. W is a matrix to down-weight the influence of the over-represented class, i.e. null label, by the reciprocal of its occurrence frequency. $\mathbb{L}_{reg}$ is $L_2$ regularization on the model parameters.

**Using SOMA.** The automatic labeling pipeline ref starts with a labeled mocap frame that can roughly resemble the marker layout of the target dataset. If the dataset has significant variations in marker layout, many displaced or removed markers, we preferably use one labeled frame per each major variation. We then train one model for the whole dataset.

After training with synthetic data produced for the target marker layout, we preferably apply SOMA on mocap sequences in per-frame mode. On GPU, auto-labeling runs at 52 $\pm$ 12Hz in non-batched mode and, for a batch of 30 frames runtime is 1500 $\pm$ 400Hz. In cases where the mocap hardware provides tracklets of points, we assign the most frequent label for a tracklet to all of the member points; we call this tracklet labeling. For four detailed examples of using SOMA see the detailed explanation below.

**Network Details.** Through model selection we choose 35 iterations for Sinkhorn and k = 8 as optimal choices and we empirically pick $c_l$ = 1, $c_{reg}$ =5e-5, $d_{model}$ = 125, h = 5. The model contains 1.43 M parameters and full training on 8 Titan V100 GPUs takes roughly 3 hours. For further architecture details see below.

**Experiments**

**Evaluation Datasets.** We evaluate the preferred embodiment SOMA quantitatively on various mocap datasets with real marker data and synthetic noise; namely: BMLrub [48], BMLmovi [14], and KIT [24]. The individual datasets offer various maker layouts with different marker density, subject shape variation, body pose, and recording systems. We take original marker data from their respective public access points and further corrupt the data with controlled noise, namely marker occlusion, ghost points, and per-frame random shuffling. For per-frame experiments broken trajectory noise is not used. We report the performance of SOMA for various noise levels.

For model selection and validation experiments we utilize a separate dataset with a different capture scenario, namely HDMo5 [29] to avoid overfitting model hyperparameters to test datasets. HDMo5 contains 215 sequences, across 4 subjects, with 40 markers.

**Evaluation Metrics.** Primarily, we report F1 score and accuracy in percent. Accuracy is the proportion of correct predicted labels over all labels, and F1 score is regarded as the harmonicaverage of the precision and recall:

$$F1 = 2 \times \frac{\text{precision} \times \text{recall}}{\text{precision} + \text{recall}}, \qquad (2)$$

where recall is the proportion of correct predicted labels over actual labels and precision is regarded as the proportion of actual correct labels over predicted labels. We gather the original and predicted labels in all test frames and to produce one representative number for all labels we use SciPy [53] to compute support-weighted average F1 score and accuracy.

**Effectiveness of the MoCap Noise Generation**

Here we train and test SOMA with various amounts of synthetic noise. The marker data for training is synthetic and is produced for the layout of HDMo5. We test on original markers of HDMo5 corrupted with synthetic noise. Base stands for no noise, Base+C for up-to 5 markers occluded per-frame, Base+G for up-to 3 ghost points per-frame, and Base+C+G for the full treatment of the occlusion and ghost point noise model. Table 1 shows that, as amount of per-frame noise during training increases, model becomes more robust to noise at test time, without suffering much in terms of accuracy when there is less noise than expected.

| Test Train | Base | | B+C | | B+G | | B+C+G | |
|---|---|---|---|---|---|---|---|---|
| | Acc. | F1 | Acc. | F1 | Acc. | F1 | Acc. | F1 |
| Base | 97.89 | 98.29 | 87.33 | 88.50 | 89.34 | 90.11 | 80.22 | 81.32 |
| B+C | 97.50 | 98.22 | 97.27 | 97.33 | 95.16 | 95.33 | 94.38 | 94.45 |
| B+G | 97.83 | 98.50 | 96.23 | 96.32 | 97.99 | 98.01 | 96.23 | 96.24 |
| B+C+G | 96.40 | 97.72 | 96.32 | 96.53 | 96.56 | 96.67 | 96.37 | 96.40 |

Table 1: Synthetic noise model evaluated on real mocap markers of HDMo5 with added noise. "B, C, G" respectively stand for Base model or data, Occlusion, and Ghost points. We report the accuracy and F1 score of the results. Base model is trained with no noise and base data in test includes no noise.

**Comparison with Previous Work**

We compare SOMA against the per-frame performance of prior work in Tab. 2 under the same circumstances. Specifically, we use train and test data splits of BMLrub dataset explained by [13]. The test happens on real markers with synthetic noise. We train SOMA once with real marker data and once by synthetic markers produced by motions of the same split.

Additionally, we train SOMA with the full synthetic data outlined in the above section on Synthetic MoCap Generation. Performance of other competing methods is originally reported by [13]. Model trained with synthetic markers coupled with more body parameters from AMASS shows similar or even superior performance over the model trained with limited real, or synthetic data. We believe this is mostly due to rich variation in our noise generation pipeline.

SOMA shows a stable, superior performance on full range of occlusions while prior art shows unstable deteriorating performance. Furthermore, unlike previous work SOMA can process ghost points without extra heuristics; last column in Tab. 2.

Table 2: Comparing SOMA with prior work on the same data. We train SOMA in three different ways: once with real data; once with synthetic markers placed on bodies of the same motions obtained from AMASS; and ultimately once with the data produced as explained above, designated with *.

| Method | Number of Exact Per-Frame Occlusions | | | | | | |
|---|---|---|---|---|---|---|---|
| | 0 | 1 | 2 | 3 | 4 | 5 | 5+G |
| Holzreiter et al. [19] | 88.16 | 79.00 | 72.42 | 67.16 | 61.13 | 52.10 | --- |
| Maycock et al. [27] | 83.19 | 79.35 | 76.44 | 74.91 | 71.17 | 65.83 | --- |
| Ghorbani et al. [13] | 97.11 | 96.56 | 96.13 | 95.87 | 95.75 | 94.90 | --- |
| **SOMA-Real** | **99.23** | **98.99** | **98.70** | 98.37 | 97.98 | 97.51 | 97.36 |
| **SOMA-Synthetic** | 99.23 | 98.98 | 98.69 | 98.32 | 97.87 | 97.31 | 96.28 |

(continued)

| Method | Number of Exact Per-Frame Occlusions | | | | | | |
| | 0 | 1 | 2 | 3 | 4 | 5 | 5+G |
|---|---|---|---|---|---|---|---|
| **SOMA** * | 98.59 | 98.58 | 98.58 | **98.54** | **98.46** | **98.33** | **97.84** |

### Performance on Various MoCap Setups

Performance on Various MoCap Datasets could vary due to variations in the marker density, mocap quality, subject shape and motions. We assess performance of SOMA on three major sub-datasets of AMASS with full synthetic noise including up to 50 broken trajectories that best mimic the situation with a realistic capture session. Additionally we evaluate tracklet labeling as explained above. We observe consistent high performance of SOMA across the datasets; Tab. 3. We observe a slight reduction of performance with increasing number of markers; this is likely due to the factorial increase in permutations with marker count. Tracklet labeling further stabilizes the performance.

| Datasets | Per-Frame | | Tracklet | | # | # | # |
| | Acc. | F1 | Acc. | F1 | Markers | Motions | Subjects |
|---|---|---|---|---|---|---|---|
| BMLrub [48] | 99.13 | 99.11 | 99.51 | 99.50 | 41 | 3060 | 111 |
| KIT[24] | 99.35 | 99.34 | 99.52 | 99.52 | 53 | 4231 | 55 |
| BMLmovi[14] | 98.26 | 98.24 | 99.08 | 99.07 | 67 | 1801 | 86 |

Table 3: Performance of SOMA on real marker data of various datasets with large variation in number of subjects, body pose, markers, and hardware specifics. We corrupt the real marker data with additional noise, and turn it into MPC before passing through SOMA pipeline.

**Performance on Subsets or Supersets of a Specific Marker Layout** could introduce more challenges due to additional structured noise. Superset is the set of all labels in a dataset. A base model trained on a superset marker layout and tested on subsets would be subject to structured occlusions, while a model trained on subset and tested on the base mocap would see structured ghost points. These situations commonly happen across a dataset when trial coordinators improvise on the planned marker layout for a special capture session with additional or fewer markers. Alternatively, markers often fall off during the trial. To quantitatively determine the range of performance variance we take the marker layout of the validation dataset, HDM05, and omit markers in progressive steps; Tab. 4. The model, trained on subset layout and tested on base markers, shows more deterioration in performance compared to the base model trained on the superset and tested on reduced markers.

| # Markers Removed | 3 | | 5 | | 6 | | 12 | |
| | Acc. | F1 | Acc. | F1 | Acc. | F1 | Acc. | F1 |
|---|---|---|---|---|---|---|---|---|
| Base Model | 96.33 | 96.48 | 94.73 | 95.52 | 96.89 | 94.90 | 88.51 | 90.59 |
| Base MoCap | 95.87 | 95.87 | 94.93 | 94.93 | 85.68 | 85.71 | 86.76 | 86.81 |

Table 4: Robustness to variations in marker layout. A base model is trained with full marker layout and tested per-frame on real markers from validation set (HDM05) with omitted markers. Additionally, one model is trained per varied layout and tested on base mocap markers.

**EP 4 163 882 A2**

## Ablation Studies

Table 5 shows the effect of various components of the mocap generation pipeline and the SOMA architecture in the final performance of the model on the validation dataset, HDMo5. The self-attention layer plays the most significant role in the performance of the model. Also the novel noise component, namely random marker placement, seems to improve the generalization of the model to new mocap data. The optimal transport layer improves accuracy of the model by 1.21% over the standard Log-Softmax normalization.

| Version | Accuracy | F1 |
|---|---|---|
| Base | 96.37 | 96.40 |
| AMASS Noise Model | 95.50 | 95.56 |
| CAESAR bodies | 95.72 | 95.76 |
| Log-Softmax Instead of Sinkhorn | 95.16 | 95.29 |
| Random Marker Placement | 94.36 | 94.39 |
| Transformer | 13.92 | 7.58 |

Table 5: Ablative study for SOMA on the HDMo5 dataset. The numbers reflect the contribution of each component in overall performance of the model.

## Application

**Processing Real MoCap Datasets.** We show the application of SOMA in automatically labeling four real datasets with different capture technologies, presented in Tab. 6. SOMA effectively enables running MoSh on point cloud data to get realistic body. We manually prune rendered solved bodies and show the percentage of the auto-labeled mocap sequences producing good results by success ratio. For sample renders refer to the accompanying video.

| | Type | # Points | # Subjects | Minutes | Success Ratio |
|---|---|---|---|---|---|
| CMU-II [9] | P | 40-255 | 41 | 116.30 | 80.0% |
| DanceDB [6] | A | 38 | 20 | 203.38 | 81.26% |
| Mixamo [3] | A | 38-96 | 29 | 195.37 | 78.31% |
| SOMA | P | 53-140 | 2 | 18.27 | 100.00% |
| Total | | | | 533.32 | |

Table 6: Processing uncleaned, unlabeled mocap datatasets with SOMA. Input to the pipeline are mocap sequences with possibly varying number of points; SOMA labels the points as markers and afterwards MoSh can be applied on the data to recover body surface. P stand for passive marker, and A for active marker mocap system.

**Comparison With Commercial Tool.** We record a mocap dataset with 2 subjects, performing 11 motion types, including dance, clap, kick, etc., using a Vicon system with 54 infrared "Vantage 16" [51] cameras operating at 120 Hz. In total, we record 69 motions and intentionally use a marker layout expected by Vicon. We process the reconstructed mocap point cloud data once with SOMA and once with Shogun, Vicon's auto-labeling tool. The mocap points are susceptible to occlusion, ghost points and broken trajectories. We take the manually corrected labels as ground truth and in Tab. 7 demonstrate the comparison of both auto-labeling tools. Results show similar performance of SOMA compared to the propriety tool while not requiring subject calibration data. Further below we present further details of

12

this dataset.

Table 7: SOMA vs Shogun. On a manually labeled Vicon dataset, we compare SOMA against a commercial tool for labeling performance and surface reconstruction.

| | $V2V^{median}_{mm}$ | $V2V^{mean}_{mm}$ | Acc. | F1 |
|---|---|---|---|---|
| Shogun | 0.00 $\pm$ 0.11 | 0.00 | 100.0 | 100.0 |
| SOMA | 0.09 $\pm$ 2.09 | 0.00 | 99.92 | 99.95 |

As explained above, presented methods focus on robust labeling of raw mocap point cloud sequences of bodies, in particular human bodies, in motion, subject to noise and variations across subjects, motions, marker placement, marker density, mocap quality, and capture technology. The preferred embodiment SOMA is presented to solve this problem using several innovations including a novel attention mechanism, a matching component that deals with outliers and missing data. The network is trained end-to-end on realistic synthetic data. We propose numerous techniques to achieve realistic noise and show that training on this generalizes to real data. We have extensively validated the performance of the model under various test conditions including a head-to-head scenario against a commercial tool, demonstrating similar performance, while not requiring subject calibration data. We have further demonstrated the usefulness of the method in real applications such as solving for archival mocap data, where there can be large variation in marker layout and subject identity. This verifies that our self-attention mechanism is a reliable component for labeling sparse mocap point cloud.

To fulfill the constraint $C_{iii}$ we preferably use high-quality per-frame labels. This can be improved by a temporal mechanism. Similar to any learning-based method, SOMA might be limited by the extent of the training data and its learning capacity, yet we observe good performance even on challenging dance motions. By incorporating the SMPL-X body model in synthetic data generation pipeline the method can be extended to labeling hands and face markers. Relying on feed-forward components, SOMA is extremely fast and coupled with a suitable mocap solver can potentially recover real-time body from mocap point clouds.

In the following, certain characteristics of the above-mentioned preferred embodiment SOMA shall be explained in more detail.

Fig. 5 shows the attention span as a function of layer depth in meters. The grey area indicates 95% confidence interval.

**Self-Attention Span**

As explained above, to increase the capacity of the network and learn rich point features at multiple levels of abstraction, we preferably stack multiple self-attention residual layers. Following [49], a transformer self-attention layer, as illustrated in Fig. 3, takes as input two vectors, the query (Q), and the key (K), and computes a weight vector W $\in$ [o, 1] that learns to focus on different regions of the input value (V), to produce the final output. In self-attention, all the three vectors (key, query and value) are projections of the same input; i.e. either 3D points or their features in deeper layers. All the projection operations are done by 1D-convolutions, therefore the input and the output features only differ in the last dimensions (number of channels). Following notation of [49]:

$$\text{Attention}(Q, K, V) = \text{softmax}(\frac{QK^T}{\sqrt{d_{model}}})V. \quad (1)$$

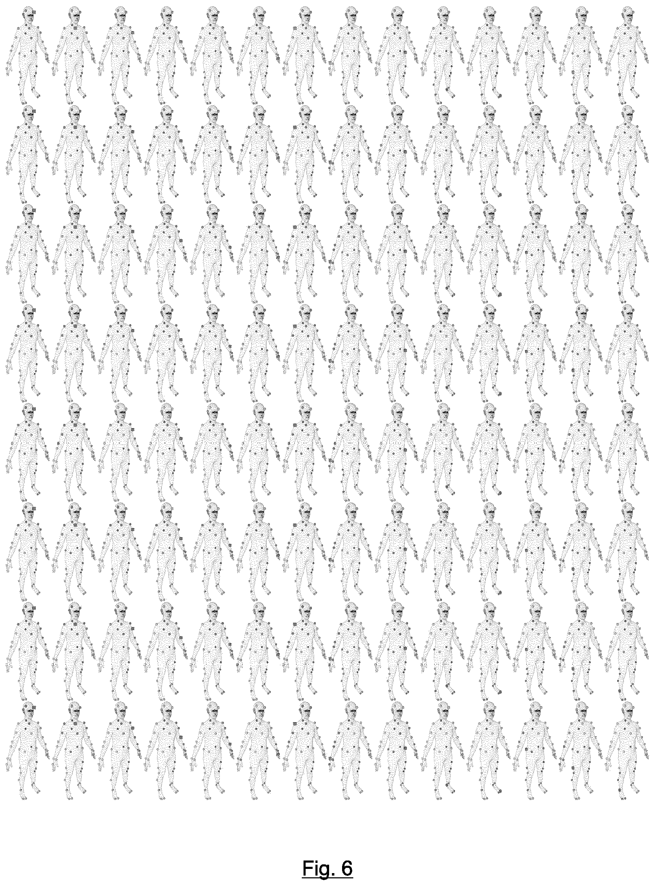

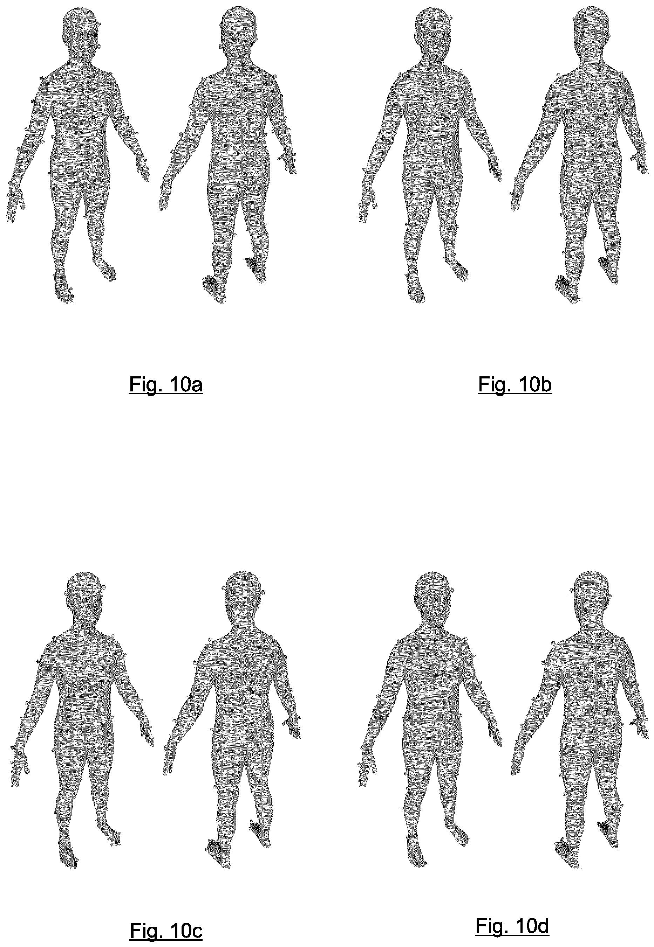

In a controlled experiment on a validation dataset, HDMo5 with marker layout presented in Fig. 10d, we pass the original markers (without noise) through the network and keep track of the attention weights at each layer; i.e. output after Softmax in the above equation. At each layer, the tensor shape for the attention weights is #batch$\times$#heads$\times$#points$\times$#points. We concatenate frames of 50 randomly selected sequences, roughly 50000 frames, and take the maximum weight across heads and the mean over all the frames to arrive at a mean attention weight per layer; (#points $\times$ #points). In Fig. 4, the weights are visualized on the body for 3 markers. In the first layers, the attention span is wide and covers the entire body. In deeper layers, the attention becomes gradually more focused on the marker of the interest and its neighboring markers on the body surface. Fig. 6 shows the attention span for more markers.

To make this observation more concrete, we compute the Euclidean distance of each marker to all others on a T-Posed body to create a distance discrepancy matrix of (#points $\times$ #points), and multiply the previous mean attention weights with this distance discrepancy matrix to arrive at a scalar for attention span in meters. We observe a narrower focus on average for all markers in deeper layers, see Fig. 5.

Fig. 6 illustrates attention span for 14 markers, across all layers. Each row corresponds to a layer in ascending order, with the bottom most row showing the last layer.

**Extra Implementation Details**

We implement SOMA in PyTorch. We benefit from the log-domain stable implementation of Sinkhorn. We use ADAM with a base learning rate of 1e - 3 and reduce it by a factor of 0.1 when validation error plateaus with patience of 3 epochs and train until validation error does not drop anymore for 10 epochs. The training code is implemented in PyTorch Lightning and easily extendable to multi-GPUs. For the LogSoftmax experiment, we replace the optimal transport layer and everything else in the architecture remains the same. In this case, the score matrix, S in Fig. 3, will have an extra dimension for the null label. The dimensionality of the features after 1D convolutions is presented in Fig. 3. All 1D convolutions of the self-attention layers use batch normalization.

**Hyper-parameter Search**

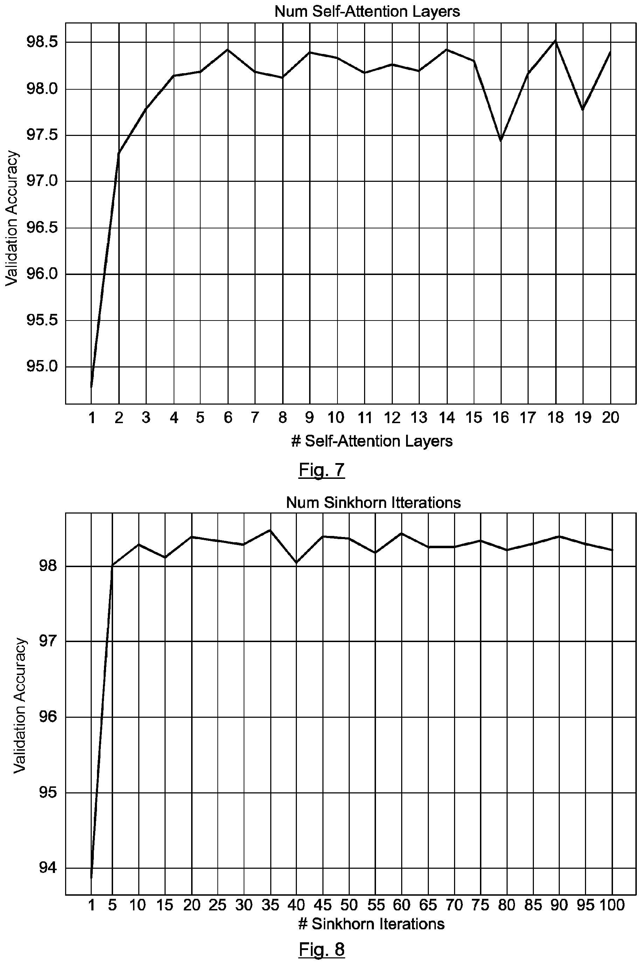

As explained above, we preferably perform a model selection experiment to choose the optimum number of attention layers and iterations for Sinkhorn normalization. We can exploit the validation dataset HDMo5 for this purpose. We produce synthetic training data following above prescription for the marker layout of HDMo5 (Fig. 10d) and evaluate on real markers with synthetic noise as explained above. For hyperparameter evaluation, we want to eliminate random variations in the network weight initialization so we always use the same seed. In Fig. 7, we train one model per given number of layers. Guided by this graph we choose k = 8 layers as a sensible choice for adequate model capacity, i.e. 1.43M, and generalization to real markers. In Fig. 8, we repeat the same process, this time keeping the number of layers fixed as 8, and varying the number of Sinkhorn iterations. We choose 35 iterations that show the best performance on the validation set.

**Marker Layout Variation of HDMo5**

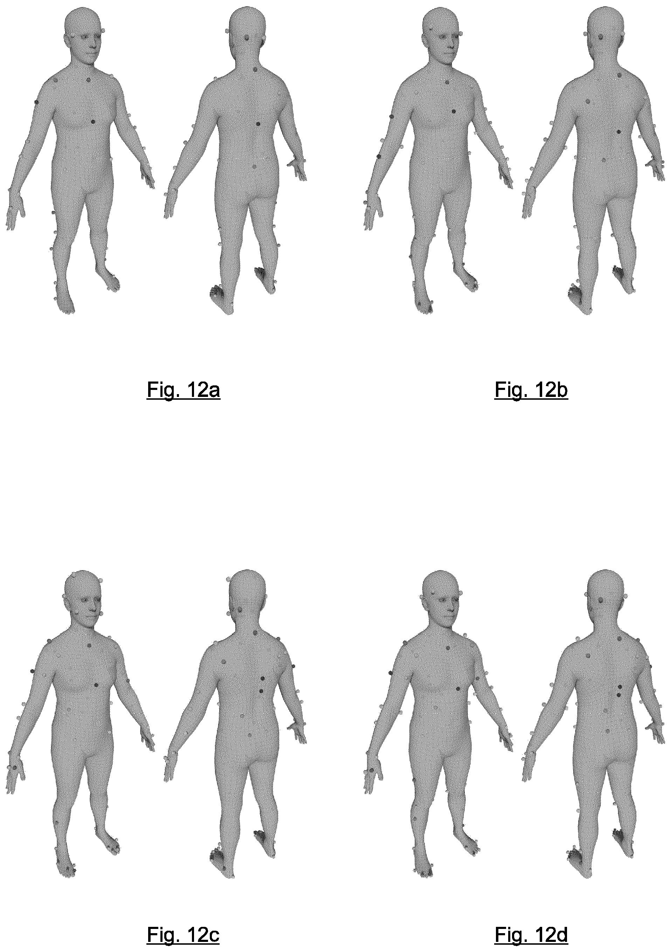

In Fig. 12 we visualize the marker layout modifications for the experiment under the above section "Performance on Various MoCap Setups".

**Processing Real MoCap Data**

Here we elaborate on the above section "Implementation Details", namely on real use-case scenarios of SOMA. The marker layout of the test datasets can preferably be obtained by running MoSh on a single random frame chosen from the respective dataset. Fig. 12 demonstrates the marker layout used for training SOMA for each dataset.

In addition to test datasets with synthetic noise, presented in the above section "Implementation Details", we demonstrate the real application of SOMA by automatically labeling four real mocap datasets captured with different technologies; namely: two with passive markers, SOMA and CMU-II [3], and two with active marker technology, namely DanceDB [2] and Mixamo [1]; for an overview refer to Tab. 6 above.

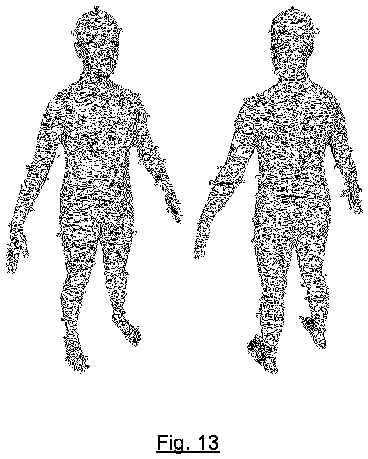

For proper training of SOMA we use one labeled frame per significant variation of the marker layout throughout the dataset. Most of the time one layout is systematically used to originally capture the entire dataset, yet as we see next, this is not always the case, especially when the marker layout is adapted to the target motion. To reduce the effort of labeling the single frame we offer a semi-automatic bootstrapping technique. To that end, we train a general SOMA model with a marker layout containing 89 markers selected from the MoSh dataset, visualized in Fig. 13; this is a marker super-set. We choose one sequence per each of representative layouts and run the general SOMA to prime the labels; we choose one frame per auto-labeled sequence and correct any incorrect labels manually. The label priming step significantly reduces the manual effort required for labeling mocap datasets with diverse marker layouts. After this step, everything stays the same as before.

**Labeling Active Marker Based MoCap** should be the easiest case since the markers emit a frequency-modulated light that allows the mocap system to reliably track them. However, often the markers are placed at arbitrary locations on the body, so correspondence of the frequency to the location on body is not the same throughout the dataset, hence these archival mocap datasets cannot be directly solved. This issue is further aggravated when the marker layout is unknown and changes drastically throughout the dataset. It should be noted that, for the case of active marker mocap systems, such issues could potentially be avoided by a carefully documented capture scenario, yet this is not the case with the majority of the archival data.

As an example, we take DanceDB [6], a publicly released dance-specific mocap database. This dataset is recorded by active marker technology from PhaseSpace [33]. The database contains a rich repertoire of dance motions with 13 subjects on the last access date. We observe a large variation in marker placement especially on the feet and hands, hence we manually label one random frame per each significant variation; in total 8 frames. We run the first stage of MoSh independently on each of the selected 8 frames to get a fine-tuned marker layout; a subset is visualized in Fig. 13. It is important to note that we train only one model for the whole dataset while different marker layouts are handled as a source of noise. As presented in Tab. 6, manual evaluation of the solved sequences reveals an above 80% success rate. The failures are mainly due to impurities in the original data, such as excessive occlusions or large marker movement on the body due to several markers coming off (e.g. the headband).

The second active marker based dataset is Mixamo [3], which is widely used by the computer vision and graphics community for animating characters. We obtained the original unlabeled mocap marker data used to generate the animations. We observe more than 50 different marker layouts and placements on the body, of which we pick 19 key variants. The automatic label priming technique is greatly helpful for this dataset.

The Mixamo dataset contains many sequences with markers on objects, i.e. props, which SOMA is not specifically trained to deal with. However, we observe stable performance even with challenging scenarios with a guitar close to the body; see the third subject from the left of Fig. 1. A large number of solved sequences were rejected mostly due to issues with the raw mocap data; e.g. significant numbers of markers flying off the body mid capture.

**Labeling Passive Marker Based MoCap** is a greater challenge for an auto-labeling pipeline. For these systems, markers are assigned a new ID on their reappearance from an occlusion, which results in small tracklets instead of full trajectories. The assignment of the ID to markers is random.

For the use first case, we process an archived portion of the well-known CMU mocap dataset [9] summing to 116 minutes of mocap which has not been processed before, mostly due to cost constraints associated with manual labeling. It is worth noting that the total amount of available data is roughly 6 hours of which around 2 hours is pure MPC. Initial inspection reveals 15 significant variations in marker layouts, with a minimum 40 markers and a maximum 62; a sample of which can be seen in Fig. 12. Again we train one model for the whole dataset that can handle variations of these marker layouts. SOMA shows stable performance across the dataset even in presence of occasional object props as seen in Fig. 1; the second subject from the left is carrying a suitcase.

In the second case, we record our own dataset with two subjects for which we pick one random frame and train SOMA for the whole dataset. In Tab. 8 we present details of the dataset motions and per-class performance of SOMA. For this dataset, we manually label it to have ground truth and then we fit the labeled data with MoSh. This provides ground truth 3D meshes for every mocap frame. The V2V error measures the average difference between the vertices of the solved body using the ground truth and using the SOMA labels. Mean V2V errors are under one mm and usually by an order of magnitude. Sub-millimeter accuracy is what users of mocap systems expect and SOMA delivers this.

| Name | # Frames | # Motions | Acc. | F1 | $V2V_{mm}^{mean}$ | $V2V_{mm}^{median}$ |
|---|---|---|---|---|---|---|
| Random | 1033023 | 7 | 99.89 | 99.94 | $0.02 \pm 0.46$ | 0.00 |
| Lift | 896376 | 6 | 100.00 | 100.00 | $0.01 \pm 0.16$ | 0.00 |
| Dance | 794190 | 8 | 99.79 | 99.89 | $0.13 \pm 1.66$ | 0.00 |
| Walk | 648569 | 6 | 100.00 | 100.00 | $0.00 \pm 0.06$ | 0.00 |
| Squat | 596429 | 6 | 100.00 | 100.00 | $0.01 \pm 0.17$ | 0.00 |
| Kick | 571018 | 6 | 99.59 | 99.64 | $0.79 \pm 6.95$ | 0.00 |
| Sit | 519665 | 6 | 100.00 | 100.00 | $0.00 \pm 0.05$ | 0.00 |
| Jump | 502827 | 6 | 100.00 | 100.00 | $0.00 \pm 0.39$ | 0.00 |
| Run | 492628 | 6 | 100.00 | 100.00 | $0.01 \pm 0.11$ | 0.00 |
| Throw | 491851 | 6 | 100.00 | 100.00 | $0.00 \pm 0.03$ | 0.00 |
| Clap | 401186 | 6 | 100.00 | 100.00 | $0.00 \pm 0.00$ | 0.00 |
| | 6947762 | 69 | 99.92 | 99.95 | $0.09 \pm 2.09$ | 0.00 |

Table 8: Per-class statistics of the SOMA dataset and performance of the trained SOMA model.

**List** of Symbols

Table 9 gives an overview of the used mathematical symbols.

Table 9: List of Symbols

| Symbol | Description |
|---|---|
| MPC | MoCap Point Cloud |
| $L$ | set of labels including the null label |
| l | a single label |
| v | vector of marker layout body vertices corresponding to labels not including null |
| $\tilde{v}$ | vector of varied marker layout vertices |
| M | number of markers |
| P | set of all points |
| G' | ground-truth augmented assignment matrix |
| A | predicted assignment matrix |
| A' | augmented assignment matrix |
| S | score matrix |
| W | class balancing weight matrix |
| X | markers |
| V | body vertices |
| $d$ | marker distance from the body along the surface normal |
| J | body joints |
| $h$ | number of attention heads |
| k | number of attention layers |

## References

[1] Mohammad Abdulkader Abdulrahim. Parallel Algorithms for Labeled Graph Matching. PhD thesis, USA, 1998. AAI0599838.

[2] Ryan Prescott Adams and Richard S. Zemel. Ranking via Sinkhorn Propagation, 2011.

[3] Adobe Mixamo MoCap Dataset. Mixamo MoCap Dataset, 2019.

[4] Advanced Computing Center for the Arts and Design. ACCAD MoCap Dataset, 2019.

[5] Ijaz Akhter and Michael J. Black. Pose-conditioned joint angle limits for 3D human pose reconstruction. In 2015 IEEE Conference on Computer Vision and Pattern Recognition (CVPR), pages 1446-1455, June 2015.

[6] Andreas Aristidou, Efstathios Stavrakis, Margarita Papaefthimiou, George Papagiannakis, and Yiorgos Chrysanthou. Style-based motion analysis for dance composition. 2018.

[7] A. C. Berg, T. L. Berg, and J. Malik. Shape matching and object recognition using low distortion correspondences. In 2005 IEEE Computer Society Conference on Computer Vision and Pattern Recognition (CVPR'05), volume 1, pages 26-33 vol. 1, 2005.

[8] T. S. Caetano, Li Cheng, Q. V. Le, and A. J. Smola. Learning graph matching. In 2007 IEEE 11th International Conference on Computer Vision, pages 1-8, 2007.

[9] Carnegie Mellon University. CMU MoCap Dataset, 2019.

[10] R. Q. Charles, H. Su, M. Kaichun, and L. J. Guibas. Pointnet: Deep learning on point sets for 3d classification and segmentation. In 2017 IEEE Conference on Computer Vision and Pattern Recognition (CVPR), pages 77-85, 2017.

[11] Renato Contini. Body segment parameters, part II. Artificial Limbs, 16(1):1-19, 1972.

[12] L. Ge, H. Liang, J. Yuan, and D. Thalmann. Robust 3d hand pose estimation in single depth images: From single-view cnn to multi-view cnns. In 2016 IEEE Conference on Computer Vision and Pattern Recognition (CVPR), pages 3593- 3601, 2016.

[13] Saeed Ghorbani, Ali Etemad, and Nikolaus F. Troje. Autolabelling of Markers in Optical Motion Capture by Permutation Learning. In Advances in Computer Graphics, Lecture Notes in Computer Science, pages 167-178. Springer International Publishing, 2019.

[14] Saeed Ghorbani, Kimia Mahdaviani, Anne Thaler, Konrad Kording, Douglas James Cook, Gunnar Blohm, and Nikolaus F. Troje. MoVi: A large multipurpose motion and video dataset, 2020.

[15] Shangchen Han, Beibei Liu, Robert Wang, Yuting Ye, Christopher D Twigg, and Kenrick Kin. Online Optical Marker-Based Hand Tracking with Deep Labels. ACM Transactions on Graphics, 37(4):10, 2018.

[16] K. He, X. Zhang, S. Ren, and J. Sun. Deep residual learning for image recognition. In 2016 IEEE Conference on Computer Vision and Pattern Recognition (CVPR), pages 770- 778, 2016.

[17] Lorna Herda, Pascal Fua, Ralf Plänkers, Ronan Boulic, and Daniel Thalmann. Using skeleton-based tracking to increase the reliability of optical motion capture. Human Movement Science, 20(3):313-341, June 2001.

[18] Daniel Holden. Robust solving of optical motion capture data by denoising. ACM Trans. Graph., 37(4):165:1-165:12, July 2018.

[19] Stefan Holzreiter. Autolabeling 3D tracks using neural networks. 2005.

[20] Vladimir Joukov, Kevin Lin, Jonathan F. S.and Westermann, and Dana Kulic. Real-time unlabeled marker pose estimation via constrained extended kalman filter. In Proceedings of the 2018 International Symposium on Experimental Robotics, pages 762-771, 2020.

[21] Marius Leordeanu and Martial Hebert. A spectral technique for correspondence problems using pairwise constraints. ICCV'05, page 1482-1489, USA, 2005. IEEE Computer Society.

[22] Matthew M. Loper, Naureen Mahmood, and Michael J. Black. MoSh: Motion and shape capture from sparse markers. ACM Transactions on Graphics, (Proc. SIGGRAPH Asia), 33(6):220:1-220:13, Nov. 2014.

[23] Naureen Mahmood, Nima Ghorbani, Nikolaus F. Troje, Gerard Pons-Moll, and Michael J. Black. AMASS: Archive of motion capture as surface shapes. In 2019 IEEE/CVF International Conference on Computer Vision (ICCV), pages 5441-5450, Oct. 2019.

[24] C. Mandery, Ö. Terlemez, M. Do, N. Vahrenkamp, and T. Asfour. The KIT whole-body human motion database. In 2015 International Conference on Advanced Robotics (ICAR), pages 329-336, July 2015.

[25] Charles Malleson Adrian Hilton Matthew Trumble, Andrew Gilbert and John Collomosse. Total capture: 3d human pose estimation fusing video and inertial sensors. In Proceedings of the British Machine Vision Conference (BMVC), pages 14.1-14.13, Sept. 2017.

[26] D. Maturana and S. Scherer. Voxnet: A 3d convolutional neural network for real-time object recognition. In 2015 IEEE/RSJ International Conference on Intelligent Robots and Systems (IROS), pages 922-928, 2015.

[27] Jonathan Maycock, Tobias Röhling, Matthias Schröder, Mario Botsch, and Helge Ritter. Fully Automatic Optical Motion Tracking using an Inverse Kinematics Approach. In Proceedings of IEEE-RAS International Conference on Humanoid Robots, 2015.

[28] J. Meyer, M. Kuderer, J. Müller, and W. Burgard. Online marker labeling for fully automatic skeleton tracking in optical motion capture. In 2014 IEEE International Conference on Robotics and Automation (ICRA), pages 5652-5657, May 2014.

[29] M. Müller, T. Röder, M. Clausen, B. Eberhardt, B. Krüger, and A. Weber. Documentation mocap database HDMo5. Technical Report CG-2007-2, Universität Bonn, June 2007.

[30] Inc. NaturalPoint. OptiTrack Motion Capture Systems, 2019.

[31] Georgios Pavlakos, Vasileios Choutas, Nima Ghorbani, Timo Bolkart, Ahmed A. A. Osman, Dimitrios Tzionas, and Michael J. Black. Expressive body capture: 3D hands, face, and body from a single image. In Proceedings IEEE Conf. on Computer Vision and Pattern Recognition (CVPR), June 2019.

[32] Gabriel Peyré and Marco Cuturi. Computational optimal transport. Foundations and Trends® in Machine Learning, 11(5-6):355-607, 2019.

[33] PhaseSpace Inc. Impulse X2E MoCap System, 2019.

[34] Charles R. Qi, Li Yi, Hao Su, and Leonidas J. Guibas. Pointnet++: Deep hierarchical feature learning on point sets in a metric space. In Proceedings of the 31st International Conference on Neural Information Processing Systems, NIPS'17, page 5105-5114, Red Hook, NY, USA, 2017. Curran Associates Inc.

[35] Maurice Ringer and Joan Lasenby. Multiple Hypothesis Tracking for Automatic Optical Motion Capture. In Eccv, 2002.

[36] M. Ringer, J. Lasenby, David Marshall, and Paul L. Rosin. A procedure for automatically estimating model parameters in optical motion capture. In Proceedings of the British Machine Vision Conference, pages 73.1-73.10. BMVA Press, 2002.

[37] K. Robinette, S. Blackwell, H. Daanen, M. Boehmer, S. Fleming, T. Brill, D. Hoeferlin, and D. Burnsides. Civilian American and European Surface Anthropometry Resource (CAESAR) final report. Technical Report AFRL-HE-WP-TR-2002-0169, US Air Force Research Laboratory, 2002.

[38] Paul-Edouard Sarlin, Daniel DeTone, Tomasz Malisiewicz, and Andrew Rabinovich. SuperGlue: Learning feature matching with graph neural networks. In IEEE/CVF Conference on Computer Vision and Pattern Recognition (CVPR), 2020.

[39] T. Schubert, A. Gkogkidis, T. Ball, and W. Burgard. Automatic initialization for skeleton tracking in optical motion capture. In 2015 IEEE International Conference on Robotics and Automation (ICRA), pages 734-739, May 2015.

[40] L. Sigal, A. Balan, and M. J. Black. HumanEva: Synchronized video and motion capture dataset and baseline algorithm for evaluation of articulated human motion. International Journal of Computer Vision, 87(4):4-27, Mar. 2010.

[41] Richard Sinkhorn. A relationship between arbitrary positive matrices and doubly stochastic matrices. The Annals of Mathematical Statistics, 35(2):876-879, 1964.

[42] Richard Sinkhorn and Paul Knopp. Concerning nonnegative matrices and doubly stochastic matrices. 1967.

[43] Yang Song, Luis Goncalves, and Pietro Perona. Unsupervised learning of human motion. IEEE Trans. Pattern Anal. Mach. Intell., 25(7):814-827, July 2003.

[44] J. Steinbring, C. Mandery, F. Pfaff, F. Faion, T. Asfour, and U. D. Hanebeck. Real-time whole-body human motion tracking based on unlabeled markers. In 2016 IEEE International Conference on Multisensor Fusion and Integration for Intelligent Systems (MFI), pages 583-590, Sept. 2016.

[45] Hang Su, Subhransu Maji, Evangelos Kalogerakis, and Erik G. Learned-Miller. Multi-view convolutional neural networks for 3d shape recognition. In 2015 IEEE/CVF International Conference on Computer Vision (ICCV), 2015.

[46] Omid Taheri, Nima Ghorbani, Michael J. Black, and Dimitrios Tzionas. GRAB: A dataset of whole-body human grasping of objects. In European Conference on Computer Vision (ECCV), 2020.

[47] Lorenzo Torresani, Vladimir Kolmogorov, and Carsten Rother. Feature correspondence via graph matching: Models and global optimization. In David Forsyth, Philip Torr, and Andrew Zisserman, editors, Computer Vision - ECCV 2008, pages 596-609, Berlin, Heidelberg, 2008. Springer Berlin Heidelberg.

[48] Nikolaus F. Troje. Decomposing biological motion: A framework for analysis and synthesis of human gait patterns. Journal of Vision, 2(5):2-2, Sept. 2002.

[49] Ashish Vaswani, Noam Shazeer, Niki Parmar, Jakob Uszkoreit, Llion Jones, Aidan N Gomez, Lukasz Kaiser, and Illia Polosukhin. Attention is All you Need. In I. Guyon, U. V. Luxburg, S. Bengio, H. Wallach, R. Fergus, S. Vishwanathan, and R. Garnett, editors, Advances in Neural Information Processing Systems 30. Curran Associates, Inc., 2017.

[50] Ltd. Vicon Motion Systems. Motion Capture Systems, 2019.

[51] Ltd. Vicon Motion Systems. Vicon Vantage: Cutting edge, flagship camera with intelligent feedback and resolution., 2019.

[52] Cedric Villani. Optimal transport - Old and new, volume 338, pages xxii+973. 01 2008.

[53] Pauli Virtanen, Ralf Gommers, Travis E. Oliphant, Matt Haberland, Tyler Reddy, David Cournapeau, Evgeni Burovski, Pearu Peterson, Warren Weckesser, Jonathan Bright, Stefan J. van der Walt, Matthew Brett, Joshua Wilson, K. Jarrod Millman, Nikolay Mayorov, Andrew R. J. Nelson, Eric Jones, Robert Kern, Eric Larson, C J Carey, Ilhan Polat, Yu Feng, Eric W. Moore, Jake VanderPlas, Denis Laxalde, Josef Perktold, Robert Cimrman, Ian Henriksen, E. A. Quintero, Charles R. Harris, Anne M. Archibald, Antonio H. Ribeiro, Fabian Pedregosa, Paul van Mulbregt, and SciPy 1.0 Contributors. SciPy 1.0: Fundamental Algorithms for Scientific Computing in Python. Nature Methods, 17:261-272, 2020.

[54] Xiaolong Wang, Ross Girshick, Abhinav Gupta, and Kaiming He. Non-local neural networks. CVPR, 2018.

[55] Zhirong Wu, S. Song, A. Khosla, Fisher Yu, Linguang Zhang, Xiaoou Tang, and J. Xiao. 3D ShapeNets: A deep representation for volumetric shapes. In 2015 IEEE Conference on Computer Vision and Pattern Recognition (CVPR), pages 1912-1920, June 2015.

**Claims**

1. A Computer-implemented method for labelling motion-captured points which correspond to markers on an object, the method comprising:

   - obtaining the motion-captured points,
   - processing a representation of the motion-captured points in a trained self-attention unit to obtain label scores for the motion-captured points, and
   - assigning labels based on the label scores.

2. The method of claim 1, wherein the self-attention unit comprises a sequence of two or more subnetworks, preferably each subnetwork comprising a self-attention layer that is configured to: determine a query from a particular subnetwork input, determine keys derived from subnetwork inputs, determine values derived from subnetwork inputs, and use the determined query, keys and values to generate an output for the particular subnetwork input.

3. The method of claim 2, wherein at least one of the one or more subnetworks comprises residual connections that combine an output of the self-attention layer with inputs to the self-attention layer to generate a self-attention residual output, wherein the at least one subnetwork preferably further comprises a normalization layer that applies normalization to the self-attention residual output.

4. The method of one of the previous claims, further comprising a step of employing an optimal transport of the label scores to enforce

- a first constraint that each of the motion-captured points can be assigned to at most one label and vice versa,
- a second constraint that each of the motion-captured points can be assigned at most to one tracklet, and/or
- a third constraint that all member points of a given tracklet are assigned to a same label, wherein preferably the method comprises a step of assigning a most frequent label of member points of the given tracklet is assigned to all of the member points of the given tracklet,

wherein preferably the labels comprise a null label for which the first and/or third constraint does not apply.

5. The method of one of the previous claims, wherein assigning labels based on the label scores comprises constraining rows and columns of a score matrix that comprises the labels scores to obtain an assignment matrix, preferably wherein the constraining the rows and columns of the score matrix comprises using optimal transport, preferably depending on iterative Sinkhorn normalization, to constrain the rows and columns of the assignment matrix to sum to 1 for available points and labels, respectively, to obtain an augmented assignment matrix with a row and/or column for unassigned labels and/or points, respectively.

6. The method of one of the previous claims, wherein the self-attention unit has been trained using virtual marker locations as input and corresponding labels as output, wherein preferably the virtual marker locations have been obtained by distorting initial virtual marker locations.

7. The method of one of the previous claims, further comprising a step of fitting an articulated 3D body mesh to the labelled motion-captured points.

8. A method of training a self-attention unit for labelling motion-captured points which correspond to markers on one or multiple objects, the method comprising:

- obtaining an initial training set comprising a representation of initial virtual marker locations and corresponding initial training labels,
- distorting the initial training set to obtain an augmented training set, and
- training the self-attention unit with the augmented training set.

9. The method of claim 8, wherein the representation of the virtual maker locations comprises vertex identifiers and distorting the initial training set comprises:

- randomly sampling a vertex identifier in a neighbourhood of an initial vertex to obtain a distorted vertex identifier, and
- adding the distorted vertex identifier to the augmented training set.

10. The method of claim 8 or 9, wherein the representation comprises points and distorting the initial virtual marker locations comprises applying a random rotation, in particular a random rotation $r \in [0,2\pi]$, to a spatial representation of initial marker locations that correspond to a same object frame.

11. The method of one of claims 8 to 10, wherein the distorting the initial training set comprises:

- appending ghost points to the frame, and/or
- occluding randomly selected initial points,

wherein preferably a number of appended ghost points and/or a number of randomly occluded marker points is determined randomly.

12. The method of one of claims 8 to 11, wherein the training the self-attention unit comprises evaluating a loss function which comprises a weighted sum of an assignment term and a model parameter regularization term, wherein in particular the loss function is representable as:

$$\mathbb{L} = c_l \mathbb{L}_A + c_{reg} \mathbb{L}_{reg},$$

where

$$\mathbb{L}_A \;=\; \frac{-1}{\sum_{i,j} G'_{i,j}} \sum_{i,j} W_{i,j} \cdot G'_{i,j} \cdot log(A'_{i,j}),$$

$$\mathbb{L}_{reg} \;=\; \|\phi\|_2^2.$$

where A' is an augmented assignment matrix, G' is a ground-truth version of the augmented assignment matrix, and W is a matrix for down-weighting an influence of an overweighted class and wherein $\mathbb{L}_{reg}$ is a $L_2$ regularization on model parameters, wherein preferably the matrix for down-weighting an influence of an overweighted class W comprises reciprocals of occurrence frequencies of classes.

13. A computer-readable storage medium storing program code, the program code comprising instructions that when executed by a processor carry out the method of one of the previous claims.

14. A system for labelling motion motion-captured points which correspond to markers on one or multiple objects, the system being configured to carry out the method of one of claims 1 to 7.

15. A system for training a self-attention unit for labelling motion-captured points which correspond to markers on one or multiple objects, the system being configured to carry out the method of one of claims 8 to 12.

Fig. 1

$t_1$ $t_2$ $t_3$ $t_4$ $t_5$ $t_6$ $t_7$ $t_8$ $(a)$ $t_9$ $t_{10}$ $t_{11}$ $t_{12}$ $t_{13}$ $t_{14}$ $t_{15}$

$t_1$ $t_2$ $t_3$ $t_4$ $t_5$ $t_6$ $t_7$ $t_8$ $(b)$ $t_9$ $t_{10}$ $t_{11}$ $t_{12}$ $t_{13}$ $t_{14}$ $t_{15}$

$t_1$ $t_2$ $t_3$ $t_4$ $t_5$ $t_6$ $t_7$ $t_8$ $(c)$ $t_9$ $t_{10}$ $t_{11}$ $t_{12}$ $t_{13}$ $t_{14}$ $t_{15}$

Fig. 2

Fig. 3

Fig. 4

Fig. 5

Fig. 6

Num Self-Attention Layers

Fig. 7

Num Sinkhorn Itterations

Fig. 8

Fig. 9a

Fig. 9b

Fig. 9c

Fig. 9d

Fig. 10a

Fig. 10b

Fig. 10c

Fig. 10d

Fig. 11a

Fig. 11b

Fig. 11c

Fig. 11d

Fig. 11e

Fig.11f

Fig. 12a

Fig. 12b

Fig. 12c

Fig. 12d

Fig. 13

## REFERENCES CITED IN THE DESCRIPTION

**Non-patent literature cited in the description**

- Parallel Algorithms for Labeled Graph Matching. **MOHAMMAD ABDULKADER ABDULRAHIM.** PhD thesis. AAI, 1998
- **RYAN PRESCOTT ADAMS ; RICHARD S. ZEMEL.** *Ranking via Sinkhorn Propagation,* 2011
- Adobe Mixamo MoCap Dataset. *Mixamo MoCap Dataset,* 2019
- Advanced Computing Center for the Arts and Design. *ACCAD MoCap Dataset,* 2019
- **IJAZ AKHTER ; MICHAEL J. BLACK.** Pose-conditioned joint angle limits for 3D human pose reconstruction. *2015 IEEE Conference on Computer Vision and Pattern Recognition (CVPR),* June 2015, 1446-1455
- **ANDREAS ARISTIDOU ; EFSTATHIOS STAVRAKIS ; MARGARITA PAPAEFTHIMIOU ; GEORGE PAPAGIANNAKIS ; YIORGOS CHRYSANTHOU.** *Style-based motion analysis for dance composition,* 2018
- **A. C. BERG ; T. L. BERG ; J. MALIK.** Shape matching and object recognition using low distortion correspondences. *2005 IEEE Computer Society Conference on Computer Vision and Pattern Recognition (CVPR'05),* 2005, vol. 1, 26-33
- **T. S. CAETANO ; LI CHENG ; Q. V. LE ; A. J. SMOLA.** Learning graph matching. *2007 IEEE 11th International Conference on Computer Vision,* 2007, 1-8
- CMU MoCap Dataset. Carnegie Mellon University, 2019
- **R. Q. CHARLES ; H. SU ; M. KAICHUN ; L. J. GUIBAS.** Pointnet: Deep learning on point sets for 3d classification and segmentation. *2017 IEEE Conference on Computer Vision and Pattern Recognition (CVPR),* 2017, 77-85
- **RENATO CONTINI.** Body segment parameters. *Artificial Limbs,* 1972, vol. 16 (1), 1-19
- **L. GE ; H. LIANG ; J. YUAN ; D. THALMANN.** Robust 3d hand pose estimation in single depth images: From single-view cnn to multi-view cnns. *2016 IEEE Conference on Computer Vision and Pattern Recognition (CVPR),* 2016, 3593-3601
- Autolabelling of Markers in Optical Motion Capture by Permutation Learning. **SAEED GHORBANI ; ALI ETEMAD ; NIKOLAUS F. TROJE.** Advances in Computer Graphics, Lecture Notes in Computer Science. Springer International Publishing, 2019, 167-178
- **SAEED GHORBANI ; KIMIA MAHDAVIANI ; ANNE THALER ; KONRAD KORDING ; DOUGLAS JAMES COOK ; GUNNAR BLOHM ; NIKOLAUS F. TROJE.** *MoVi: A large multipurpose motion and video dataset,* 2020
- **SHANGCHEN HAN ; BEIBEI LIU ; ROBERT WANG ; YUTING YE ; CHRISTOPHER D TWIGG ; KENRICK KIN.** Online Optical Marker-Based Hand Tracking with Deep Labels. *ACM Transactions on Graphics,* 2018, vol. 37 (4), 10
- **K. HE ; X. ZHANG ; S. REN ; J. SUN.** Deep residual learning for image recognition. *2016 IEEE Conference on Computer Vision and Pattern Recognition (CVPR),* 2016, 770-778
- **LORNA HERDA ; PASCAL FUA ; RALF PLÄNKERS ; RONAN BOULIC ; DANIEL THALMANN.** Using skeleton-based tracking to increase the reliability of optical motion capture. *Human Movement Science,* June 2001, vol. 20 (3), 313-341
- **DANIEL HOLDEN.** Robust solving of optical motion capture data by denoising. *ACM Trans. Graph.,* 12 July 2018, vol. 37 (4), 1-165
- **STEFAN HOLZREITER.** *Autolabeling 3D tracks using neural networks,* 2005
- **VLADIMIR JOUKOV ; KEVIN LIN ; JONATHAN F. S ; WESTERMANN ; DANA KULIC.** Real-time unlabeled marker pose estimation via constrained extended kalman filter. *Proceedings of the 2018 International Symposium on Experimental Robotics,* 2020, 762-771
- A spectral technique for correspondence problems using pairwise constraints. **MARIUS LEORDEANU ; MARTIAL HEBERT.** ICCV'05. IEEE Computer Society, 2005, 1482-1489
- **MATTHEW M. LOPER ; NAUREEN MAHMOOD ; MICHAEL J. BLACK.** MoSh: Motion and shape capture from sparse markers. ACM Transactions on Graphics. *Proc. SIGGRAPH Asia,* 13 November 2014, vol. 33 (6), 1-220
- **NAUREEN MAHMOOD ; NIMA GHORBANI ; NIKOLAUS F. TROJE ; GERARD PONS-MOLL ; MICHAEL J. BLACK.** AMASS: Archive of motion capture as surface shapes. *2019 IEEE/CVF International Conference on Computer Vision (ICCV),* October 2019, 5441-5450

- **C. MANDERY ; Ö. TERLEMEZ ; M. DO ; N. VAHRENKAMP ; T. ASFOUR.** The KIT whole-body human motion database. *2015 International Conference on Advanced Robotics (ICAR),* July 2015, 329-336
- **CHARLES MALLESON ; ADRIAN HILTON ; MATTHEW TRUMBLE ; ANDREW GILBERT ; JOHN COLLOMOSSE.** Total capture: 3d human pose estimation fusing video and inertial sensors. *Proceedings of the British Machine Vision Conference (BMVC),* September 2017, 14.1-14.13
- **D. MATURANA ; S. SCHERER.** Voxnet: A 3d convolutional neural network for real-time object recognition. *2015 IEEE/RSJ International Conference on Intelligent Robots and Systems (IROS),* 2015, 922-928
- **JONATHAN MAYCOCK ; TOBIAS RÖHLING ; MATTHIAS SCHRÖDER ; MARIO BOTSCH ; HELGE RITTER.** Fully Automatic Optical Motion Tracking using an Inverse Kinematics Approach. *Proceedings of IEEE-RAS International Conference on Humanoid Robots,* 2015
- **J. MEYER ; M. KUDERER ; J. MÜLLER ; AND W. BURGARD.** Online marker labeling for fully automatic skeleton tracking in optical motion capture. *2014 IEEE International Conference on Robotics and Automation (ICRA),* May 2014, 5652-5657
- Documentation mocap database HDMo5. **M. MÜLLER ; T. RÖDER ; M. CLAUSEN ; B. EBERHARDT ; B. KRÜGER ; A. WEBER.** Technical Report CG-2007-2. Universität Bonn, June 2007
- OptiTrack Motion Capture Systems. 2019
- **GEORGIOS PAVLAKOS ; VASILEIOS CHOUTAS ; NIMA GHORBANI ; TIMO BOLKART ; AHMED A. A. OSMAN ; DIMITRIOS TZIONAS ; MICHAEL J. BLACK.** Expressive body capture: 3D hands, face, and body from a single image. *Proceedings IEEE Conf. on Computer Vision and Pattern Recognition (CVPR),* June 2019
- **GABRIEL PEYRÉ ; MARCO CUTURI.** Computational optimal transport. *Foundations and Trends® in Machine Learning,* 2019, vol. 11 (5-6), 355-607
- Impulse X2E MoCap System. PhaseSpace Inc, 2019
- Pointnet++: Deep hierarchical feature learning on point sets in a metric space. **CHARLES R. QI ; LI YI ; HAO SU ; LEONIDAS J. GUIBAS.** Proceedings of the 31st International Conference on Neural Information Processing Systems, NIPS'17. Curran Associates Inc, 2017, 5105-5114
- **MAURICE RINGER ; JOAN LASENBY.** Multiple Hypothesis Tracking for Automatic Optical Motion Capture. *Eccv,* 2002
- A procedure for automatically estimating model parameters in optical motion capture. **M. RINGER ; J. LASENBY ; DAVID MARSHALL ; PAUL L. ROSIN.** Proceedings of the British Machine Vision Conference. BMVA Press, 2002, 73.1-73.10
- Civilian American and European Surface Anthropometry Resource (CAESAR) final report. **K. ROBINETTE ; S. BLACKWELL ; H. DAANEN ; M. BOEHMER ; S. FLEMING ; T. BRILL ; D. HOEFERLIN ; D. BURNSIDES.** Technical Report AFRL-HE-WP-TR-2002-0169. US Air Force Research Laboratory, 2002
- **PAUL-EDOUARD SARLIN ; DANIEL DETONE ; TOMASZ MALISIEWICZ ; ANDREW RABINOVICH.** SuperGlue: Learning feature matching with graph neural networks. *IEEE/CVF Conference on Computer Vision and Pattern Recognition (CVPR),* 2020
- **T. SCHUBERT ; A. GKOGKIDIS ; T. BALL ; W. BURGARD.** Automatic initialization for skeleton tracking in optical motion capture. *2015 IEEE International Conference on Robotics and Automation (ICRA),* May 2015, 734-739
- **L. SIGAL ; A. BALAN ; M. J. BLACK.** HumanEva: Synchronized video and motion capture dataset and baseline algorithm for evaluation of articulated human motion. *International Journal of Computer Vision,* March 2010, vol. 87 (4), 4-27
- **RICHARD SINKHORN.** A relationship between arbitrary positive matrices and doubly stochastic matrices. *The Annals of Mathematical Statistics,* 1964, vol. 35 (2), 876-879
- **RICHARD SINKHORN ; PAUL KNOPP.** *Concerning nonnegative matrices and doubly stochastic matrices,* 1967
- **YANG SONG ; LUIS GONCALVES ; PIETRO PERONA.** Unsupervised learning of human motion. *IEEE Trans. Pattern Anal. Mach. Intell.,* July 2003, vol. 25 (7), 814-827
- **J. STEINBRING ; C. MANDERY ; F. PFAFF ; F. FAION ; T. ASFOUR ; U. D. HANEBECK.** Real-time whole-body human motion tracking based on unlabeled markers. *2016 IEEE International Conference on Multisensor Fusion and Integration for Intelligent Systems (MFI),* September 2016, 583-590
- **HANG SU ; SUBHRANSU MAJI ; EVANGELOS KALOGERAKIS ; ERIK G. ; LEARNED-MILLER.** Multi-view convolutional neural networks for 3d shape recognition. *2015 IEEE/CVF International Conference on Computer Vision (ICCV),* 2015
- **OMID TAHERI ; NIMA GHORBANI ; MICHAEL J. BLACK ; DIMITRIOS TZIONAS.** GRAB: A dataset of whole-body human grasping of objects. *European Conference on Computer Vision (ECCV),* 2020

- Feature correspondence via graph matching: Models and global optimization. **LORENZO TORRESANI ; VLADIMIR KOLMOGOROV ; CARSTEN ROTHER.** Computer Vision - ECCV 2008. Springer Berlin Heidelberg, 2008, 596-609
- **NIKOLAUS F. TROJE.** Decomposing biological motion: A framework for analysis and synthesis of human gait patterns. *Journal of Vision,* September 2002, vol. 2 (5), 2-2
- Attention is All you Need. **ASHISH VASWANI ; NOAM SHAZEER ; NIKI PARMAR ; JAKOB USZKOREIT ; LLION JONES ; AIDAN N GOMEZ ; LUKASZ KAISER ; ILLIA POLOSUKHIN.** Advances in Neural Information Processing Systems. Curran Associates, Inc, 2017, vol. 30
- Motion Capture Systems. Ltd. Vicon Motion Systems, 2019
- Vicon Vantage: Cutting edge, flagship camera with intelligent feedback and resolution. Ltd. Vicon Motion Systems, 2019
- **CEDRIC VILLANI.** *Optimal transport - Old and new,* 2008, vol. 338
- **PAULI VIRTANEN ; RALF GOMMERS ; TRAVIS E. OLIPHANT ; MATT HABERLAND ; TYLER REDDY ; DAVID COURNAPEAU ; EVGENI BUROVSKI ; PEARU PETERSON ; WARREN WECKESSER ; JONATHAN BRIGHT.** SciPy 1.0: Fundamental Algorithms for Scientific Computing in Python. *Nature Methods,* 2020, vol. 17, 261-272
- **XIAOLONG WANG ; ROSS GIRSHICK ; ABHINAV GUPTA ; KAIMING HE.** Non-local neural networks. *CVPR,* 2018
- **ZHIRONG WU ; S. SONG ; A. KHOSLA ; FISHER YU ; LINGUANG ZHANG ; XIAOOU TANG ; J. XIAO.** 3D ShapeNets: A deep representation for volumetric shapes. *2015 IEEE Conference on Computer Vision and Pattern Recognition (CVPR),* June 2015, 1912-1920